# EUROPEAN PATENT APPLICATION

(11) **EP 1 859 928 A1**
(43) Date of publication of application: **28.11.2007**
(21) Application number: 05814438.7
(22) Date of filing: 09.12.2005
(51) Int. Cl.: B32B 5/18, B32B 25/20, E01F 8/00, E04B 1/86, E04B 2/74, G10K 11/16, G10K 11/162

(54) **SOUND ABSORBING MATERIAL AND STRUCTURE USING THE SAME**

(30) Priority: 17.03.2005 JP 2005077593
(71) Applicant: SWCC Showa Device Technology Co., Ltd., Tokyo 105-0001 (JP)
(72) Inventor: HIRAI, Susumu, c/o Showa Electric Wire & Cable Co., Ltd., Kanagawa 210-0843 (JP); OKASHITA, Minoru, c/o Showa Electric Wire & Cable Co., Ltd., Kanagawa 210-0843 (JP); KOBAYASHI, Hiroki, c/o Showa Electric Wire & Cable Co., Ltd., Kanagawa 210-0843 (JP); KITAMURA Tasuku, c/o Showa Electric Wire & Cable Co., Ltd., Kanagawa 210-0843 (JP)
(74) Representative: Glawe, Delfs, Moll
(86) International application number: PCT/JP2005/022670
(87) International publication number: WO 2006/098064

(57) **Abstract**

A sound absorbing material (1a) comprising a film (11) composed of a silicone rubber and a porous layer (12) (i.e., a first porous layer) laminated on the back surface of the film (11). The film (11) is made of a material which has flame retardancy and generates no noxious fume during combustion, such as a silicone rubber comprising only polysiloxane. The film (11) used is preferably one which has an oxygen index of 25 or higher, which exhibits a heat release value of combustion per unit volume of 8 MJ/m² or less and which exhibits a heat release rate of combustion of [200 kW/m²]·10 sec or less. The first porous layer (12) is formed from a material having flame retardancy, such as glass wool, rock wool or a mixture thereof. A structure (3a) can be formed by providing the sound absorbing material (1a) having the construction described above on a rigid wall (2) in parallel, with the first porous layer (12) facing to the rigid wall (2).

## Description

### TECHNICAL FIELD

This invention relates to a sound absorbing material and a structure using the same. In particular, this invention relates to the sound absorbing material and the structure using the same which absorbs noise of high-frequency band beyond 200Hz as well as low-frequency band of 200Hz or less effectively and can improve the degree of freedom of the product form.

### BACKGROUND ART

Heretofore, as the sound absorbing material of this kind, (a) the thing which uses a porous layer comprising a glass wool or a rock wool, and so on; (b) the thing which has an air layer in the sound source side; (c) the thing which has an air layer in the sound source side of the sound absorbing material; (d) the thing which laminates the aggregates of the high density and low density fibers more than at least two layers that the air permeability are different approximately 5-100 times; are known (for example, refer to patent document No.1).

However, in the sound absorbing materials of (a) and (b), for the noise of the frequency band beyond 500Hz or for the noise of the frequency band of 500Hz or less, it is necessary to thicken the thickness of the porous layer to bring out the required sound absorbing effect. Consequently, there was a difficult point that the weight of the sound absorbing material becomes heavy. And, in the sound absorbing materials of (c), because there is the air layer in the sound source side of the sound absorbing material, there were difficult points that the weight of the sound absorbing material became heavy and it was necessary to widen the space. Meanwhile, in the sound absorbing materials of (d), by laminating the aggregates of fibers having different density additionally to the porous sound absorbing structure which absorbs sound by using the viscous resistance of the air and by converting the energy of the sound wave to the thermal energy, the high density part plays the role of the mass and the low density part plays the role of the spring. That is, so-called dynamic vibration absorber is composed and the sound absorption coefficient is improved in low-frequency band especially. Regarding the sound absorbing material of this kind of structure, there was a difficult point that the sufficient sound absorbing effect is not obtained in so-called low-frequency band of 100Hz or less especially. In addition, because the sound or the vibration in the low-frequency band is generated by shaking of the building or the window as well as air-borne sound, it is necessary to take the prevention measures of the structure-borne sound and vibration concurrently. Therefore, it was difficult to take the prevention measures about the sound absorbing material known in the conventional technology.

For this reason, previously, the applicant of this invention developed the sound absorbing material which laminated the aggregate of fibers having different density additionally to the porous sound absorbing structure which absorbed sound by using the viscous resistance of the air and by converting the energy of the sound wave to the thermal energy. And the applicant of this invention filed the invention as a patent (Japanese Patent Publication No.2003-316364).

This sound absorbing material has the foam layer placed in the sound source side and has the porous layer laminated on the rigid wall side of this foam layer. Here, the foam layer is formed by foam including each ingredients, that is, first diol of molecular weight 500-5000, second diol of molecular weight 500 or less, inorganic filler, water as the blowing agent and isocyanate. And the porous layer is formed by general-purpose glass wool.

Regarding the sound absorbing material of this kind of structure, the high density part plays the role of the mass and the low density part plays the role of the spring. Therefore, so-called dynamic vibration absorber is composed, and the sound absorption coefficient can be improved in low-frequency band especially.

However, in the sound absor-bing material of this kind of structure, there were following difficult points.

First, because the flame retardancy is not given to the sound absorbing material itself, this sound absorbing material does not fit the standard of the flame retardancy of the Building Standard Law.

Second, in the glass wool which composes the porous layer, the sound absorbing effect becomes weak in the high-frequency band beyond 200Hz or in the low-frequency band of 200Hz or less.

Third, because the foam layer and the porous layer are composed individually, the construction on the site becomes complicated.

Patent document No.1: Japanese Patent Publication No.Hei08-152890
Patent document No.2: Japanese Patent Publication No.2003-316364

### DISCLOSURE OF THE INVENTION

### PROBLEM TO BE SOLVED BY THE INVENTION

This invention aims to provide the sound absorbing material and the structure using the same which can absorb the noise of high-frequency band beyond 200Hz as well as low-frequency band of 200 Hz or less effectively and can improve the degree of freedom of the product form.

### MEANS FOR SOLVING THE PROBLEMS

A sound absorbing material as the first feature of this invention comprises a film which is composed of a rubber, and a porous layer which is laminated on a back surface of the film.

The sound absorbing material as the second feature of this invention comprises the film which is composed of the rubber, and the porous layer which is laminated on the back surface of the film, and an another porous layer which is laminated on a front surface of the film.

According to the third feature of this invention, in the sound absorbing material of the first feature or the second feature, the rubber is composed of a silicone rubber.

According to the fourth feature of this invention, in the sound absorbing material of any one of the features from the first to the third, a heat release value of combustion of the film is 8 MJ/m² or less.

According to the fifth feature of this invention, in the sound absorbing material of any one of the features from the first to the fourth, a heat release rate of combustion of the film is [200 kW/m²]· 10 sec or less.

According to the sixth feature of this invention, in the sound absorbing material of the first feature or the second feature, the rubber is composed of any one of the rubber selected from natural rubber, isoprene rubber, styrene-butadiene rubber, butadiene rubber, nitrile-butadiene rubber, butyl rubber, ethylene-propylene rubber, fluoro-rubber, chlorosulfonated polyethylene rubber, chlorinated polyethylene rubber, epichlorohydrin rubber, polysulfide rubber and polyolefin.

According to the seventh feature of this invention, in the sound absorbing material of any one of the features from the first to the sixth, the film includes an inorganic compound.

According to the eighth feature of this invention, in the sound absorbing material of the seventh feature, the inorganic compound comprises the compound including any one of Si, Ca, Sr, Ba, or comprises a blended material of the compound including any one of Si, Ca, Sr, Ba.

According to the ninth feature of this invention, in the sound absorbing material of any one of the features from the first to the eighth, the porous layer is formed from the material having flame retardancy.

According to the tenth feature of this invention, in the sound absorbing material of any one of the features from the first to the eighth, the porous layer is formed from any one of glass wool or rock wool, or from a mixture thereof.

According to the eleventh feature of this invention, in the sound absorbing material of any one of the features from the first to the tenth, the film is integrated with the porous layer.

According to the twelfth feature of this invention, in the sound absorbing material of any one of the features from the second to the tenth, the film is integrated with either the porous layer or the another porous layer.

According to the thirteenth feature of this invention, in the sound absorbing material of the eleventh feature or the twelfth feature, the film is integrated with the porous layer and/or the another porous layer by adhesion.

According to the fourteenth feature of this invention, in the sound absorbing material of the eleventh feature or the twelfth feature, the film is integrated with the porous layer and/or the another porous layer by thermal adhesion.

According to the fifteenth feature of this invention, in the sound absorbing material of the eleventh feature or the twelfth feature, the film is integrated with the porous layer and/or the another porous layer by silicone graft reaction.

According to the sixteenth feature of this invention, in the sound absorbing material of the eleventh feature or the twelfth feature, the film is integrated with the porous layer and/or the another porous layer when a part of the film enters into empty spaces of the porous layer and/or the another porous layer.

A structure as the seventeenth feature of this invention comprises a sound absorbing material of any one of the features from the first to the sixteenth, and a rigid wall, wherein a porous layer which constitutes the sound absorbing material faces the rigid wall, and the sound absorbing material is arranged in parallel with the rigid wall.

The structure as the eighteenth feature of this invention comprises a sound absorbing material of any one of the features from the first to the sixteenth, and a sound insulation board, wherein an another porous layer which constitutes the sound absorbing material faces the sound insulation board, and the sound absorbing material is arranged in parallel with the sound insulation board.

The structure as the nineteenth feature of this invention comprises a sound absorbing material of any one of the features from the first to the sixteenth, and a rigid wall, wherein a porous layer which constitutes the sound absorbing material faces the rigid wall through an air layer, and the sound absorbing material is arranged in parallel with the rigid wall.

The structure as the twentieth feature of this invention comprises a sound absorbing material of any one of the features from the first to the sixteenth, and a sound insulation board, wherein an another porous layer which constitutes the sound absorbing material faces the sound insulation board through an air layer, and the sound absorbing material is arranged in parallel with the sound insulation board.

The structure as the twenty-first feature of this invention comprises a sound absorbing material of any one of the features from the first to the sixteenth, and a rigid wall, wherein a heat release value of combustion of the sound absorbing material is 8 MJ/m² or less, and a heat release rate of combustion of the sound absorbing material is [200 kW/m²]·10 sec or less.

### EFFECT OF THE INVENTION

According to the sound absorbing material and the structure using the same from the first feature to the eighteenth feature of this invention, there are following effects.

First, because the flame retardancy which fits the standard of the flame retardancy of the Building Standard Law is given to the sound absorbing material itself, this sound absorbing material can be arranged in the place where the flame retardancy is needed.

Second, because neither the halogen system flame retardant nor the lead compound is used as the flame retardant, there is no fear that the noxious fume is generated during combustion. And the sound absorbing material that the environmental preservation measures was given can be provided.

Third, according to the sound absorbing material and the structure using the same which has the porous layer in both sides of the film, the noise of high-frequency band beyond 200Hz as well as low-frequency band of 200 Hz or less can be absorbed effectively.

Fourth, according to the sound absorbing material and the structure using the same that the film is integrated with the porous layer, the degree of freedom of the product form can be improved.

### BRIEF DESCRIPTION OF THE FIGURES

[Fig. 1] The sectional view of the sound absorbing material and the structure using the same in the first embodiment of this invention.
[Fig.2] The illustration which shows another embodiment of the film in the first embodiment of this invention.
[Fig.3] The illustration which shows the sound absorption characteristics of the sound absorbing material in the first embodiment of this invention.
[Fig.4] The sectional view of the structure of the filmy sound absorbing structure which used the sound absorbing material in the first embodiment of this invention.
[Fig.5] The sectional view of the structure that the sound absorbing material is applied to the sound insulation wall in the first embodiment of this invention.
[Fig.6] The sectional view of the sound absorbing material and the structure using the same in the fourth embodiment of this invention.
[Fig. 7] The illustration which shows the sound absorption characteristics of the sound absorbing material in the fourth embodiment of this invention.
[Fig. 8] The sectional view of the structure of the filmy sound absorbing structure which used the sound absorbing material in the fourth embodiment of this invention.
[Fig.9] The sectional view of the structure that the sound absorbing material is applied to the sound insulation wall in the fourth embodiment of this invention.

### BEST MODE FOR CARRYING OUT THE INVENTION

Hereinafter, the embodiments which applied the sound absorbing material of this invention are explained referring to the figures.

### [First embodiment]

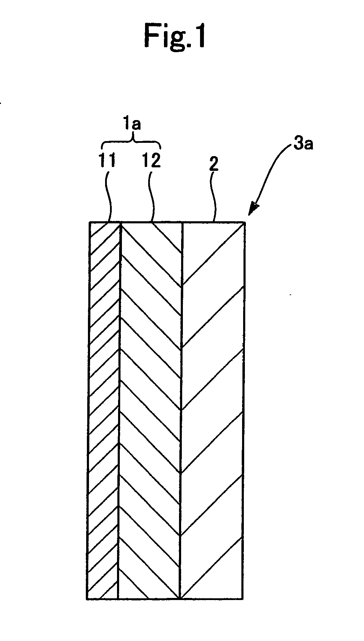

Fig.1 is the sectional view which shows the first embodiment of this invention using the sound absorbing material and the structure using the same.

In this figure, the sound absorbing material 1a of this invention comprises the film 11 composed of the silicone rubber and the porous layer 12 (hereinafter called, "first porous layer") which is laminated on the back surface of the film 11. Here, the reason to laminate the first porous layer 12 on the back surface of the film 11 composed of the silicone rubber is that the film 11 acts as the mass, that is, the role of the weight, and the first porous layer 12 acts as spring, that is, the role of the air spring, and the sound absorption is performed by membrane vibration.

In such the sound absorbing material 1a, for a rigid wall 2, by making the first porous layer 12 face the rigid wall 2, and by arranging such the sound absorbing material 1a in parallel with the rigid wall 2, a structure 3a of this invention can be formed.

The film 11 is composed of the material which has flame retardancy and generates no noxious fume during combustion. In particular, as described below, the film 11 is composed of the silicone rubber in which barium sulfate was mixed.

Next, several required performances of the film 11 of such composition are explained.

First, as the film 11, it is preferable to use the thing that the heat release value of combustion per unit volume is 8 MJ/m² or less. If the heat release value of combustion per unit volume of the film 11 exceeds 8 MJ/m², the sound absorbing material cannot fit the flame retardancy grade prescribed in No.9 of Article 2 of the Building Standard Law which is the applicable law to the product of this embodiment. Meanwhile, the heat release value of combustion of the film 11 can be adjusted by the kind or the blending quantity of the inorganic filler which is blended in the raw material resin of the film 11.

According to the aforementioned film 11 composed of silicone rubber, in the test piece of 100mm in width, 100mm in length, 3-50mm in thickness, and in the test of the heat release value of combustion prescribed in ISO5560, the heat release value of combustion per unit volume can be adjusted to 8 MJ/m² or less.

Second, as the film 11, it is preferable to use the thing that the heat release rate of combustion is [200kW/m2]·10 sec or less. If the heat release rate of combustion of the film 11 exceeds [200kW/m²]·10 sec, the sound absorbing material cannot fit the flame retardancy grade prescribed in No.9 of Article 2 of the Building Standard Law.

According to the aforementioned film 11 composed of silicone rubber, in the test piece of 100mm in width, 100mm in length, 3-50mm in thickness, and in the test of the heat release rate of combustion prescribed in ISO5560, the heat release rate of combustion can be adjusted to [200kW/m²]·10 sec or less.

Next, the first porous layer 12 is formed from the material having flame retardancy. In particular, the first porous layer 12 is formed from any one of glass wool or rock wool, or from a mixture thereof.

It is preferable to integrate the film 11 of such composition with the first porous layer 12 by adhesion or silicone graft reaction for improving the degree of freedom of the product form and for making the construction easy on the site.

According to the structure 3a using the sound absorbing material 1a of this kind of composition, because the flame retardancy which fits the standard of the flame retardancy of the Building Standard Law is given to the sound absorbing material itself, this sound absorbing material can be arranged in the place where the flame retardancy is needed. And, because neither the halogen system flame retardant nor the lead compound is used as the flame retardant, even if the sound absorbing material combusts, there is no fear that the noxious fume is generated during combustion. Further, because the film 11 is integrated with the first porous layer 12, the construction on the site can be performed easily.

Here, in the aforementioned embodiment, although the case that the film 11 is formed only with silicone rubber is explained, it is possible to form the film 11 that the compound including any one of Si, Ca, Sr and Ba as the ratio of 2:1-1:1 into silicone rubber was mixed. And it is possible to form the film 11 that the inorganic compound comprising blended material of the compound including any one of Si, Ca, Sr and Ba as the ratio of 2:1-1:1 into silicone rubber was mixed.

According to the film 11 of this kind of structure, by mixing the barium sulfate of the high-bulk density and the small grain size into the porous part of the silicone rubber of the network structure, the film having the flame retardancy, flexibility and predefined area density can be formed.

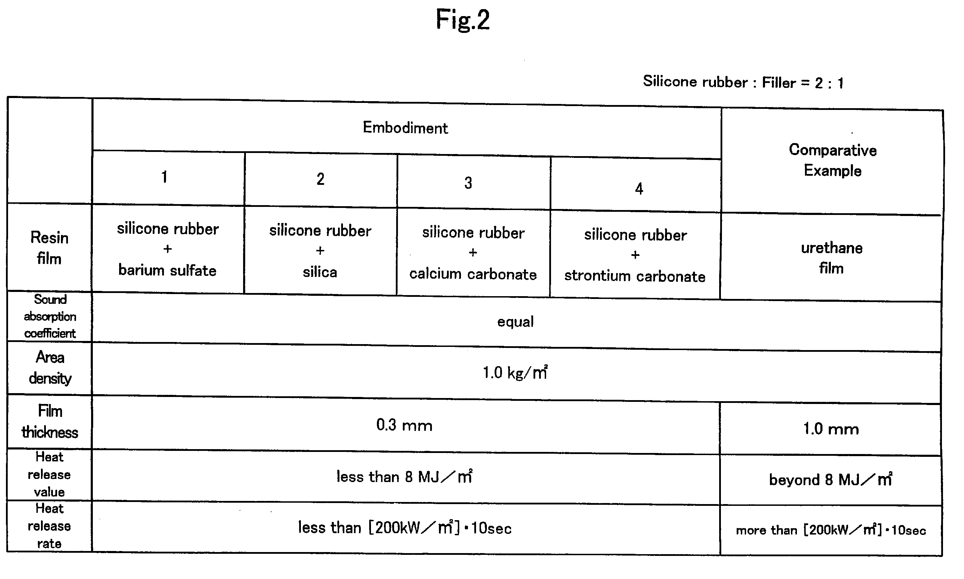

Fig.2 is the illustration which shows the sound absorption coefficient, the area density, the film thickness, the heat release value and the heat release rate of the film in the embodiment of this invention together with the comparative example.

Here, the film in this embodiment is formed by mixing silica, calcium carbonate, strontium carbonate and barium sulfate into the silicone rubber as the ratio of 2:1. And the film composed of urethane as the comparative example is used.

Meanwhile, the heat release value was measured by the means prescribed in No.9 of Article 2 of the Building Standard Law, and the heat release rate was measured by the means prescribed in ISO5660.

From this figure, in the film of this embodiment, even if the film thickness is thinned than the film thickness of the comparison example as for only about 1/3, the sound absorption coefficient and the area density which are equal to the comparative example can be obtained. And, the film in this embodiment can be fitted to the flame retardancy grade prescribed in No.9 of Article 2 of the Building Standard Law. Further, it is possible to make the heat release rate of combustion into less than [200kW/m²]·10 sec.

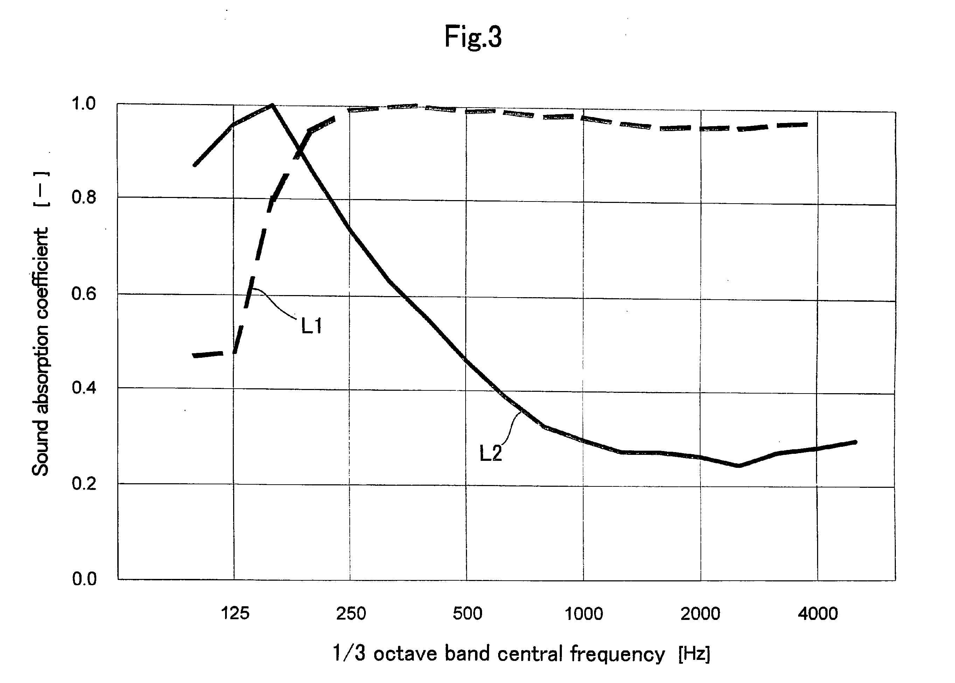

Fig.3 shows the sound absorption characteristics of the sound absorbing material 1a of the first embodiment. Here, in the figure, the dotted line L1 shows the sound absorption characteristics of the sound absorbing material of the conventional technology when the thickness of the porous layer (glass wool) is 100mm. And the solid line L2 shows the sound absorption characteristics of the flame retardant sound absorbing material of the first embodiment when the thickness of the film (silicone rubber film) 11 is 0.5mm and the thickness of the first porous layer (glass wool) 12 is 75mm.

From this figure, in the sound absorbing material (L1) of the conventional technology, it is clear that although the sound absorption coefficient in the high-frequency band beyond about 200Hz is high, the sound absorption coefficient in the low-frequency band about 200Hz or less is low. On the other hand, in the sound absorbing material (L2) of the first embodiment, it is clear that although the sound absorption coefficient in the high-frequency band beyond about 200Hz is low, the sound absorption coefficient in the low-frequency band about 200Hz or less is high. Therefore, if the sound absorbing material of the first embodiment is used, the sound absorbing material which is able to apply to the low-frequency band can be provided.

### [Second embodiment]

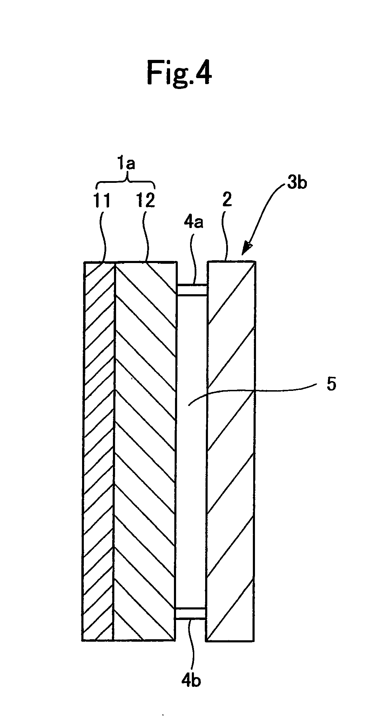

Fig. 4 shows the sectional view of the structure of the filmy sound absorbing structure which used the sound absorbing material 1a of the first embodiment. Meanwhile, in this figure, the same reference numbers are given to the portions which are common to Fig.1, and detailed explanation is omitted.

In Fig.4, the structure 3b of this invention comprises the rigid wall 2, and the filmy (thickness: about 0.5mm) sound absorbing material 1a that the first porous layer 12 faces the rigid wall 2 and which is arranged on the sound source side of the rigid wall 2 in parallel with the rigid wall 2 through a pair of supporting members 4a, 4b, and the back air layer 5 which is sectioned between the sound absorbing material 1a and the rigid wall 2.

In the structure 3b of the filmy sound absorbing structure of such composition, because the back air layer 5 acts as the spring to the mass of the filmy sound absorbing material 1a, the single resonance system is formed. And, when the frequency of the sound wave accorded with the resonance frequency of this single resonance system, the filmy sound absorbing material 1a vibrates, and sound absorption is performed by the internal friction. Therefore, according to the structure 3b of the second embodiment, as before, the structure 3b can be arranged in the place where the flame retardancy is needed. And, because neither the halogen system flame retardant nor the lead compound is used as the flame retardant, even if the sound absorbing material combusts, there is no fear that the noxious fume is generated during combustion. Further, because the film 11 is integrated with the first porous layer 12, the construction on the site can be performed easily. In addition, the sound absorption coefficient can be improved more than the structure 3a of the first embodiment.

### [Third embodiment]

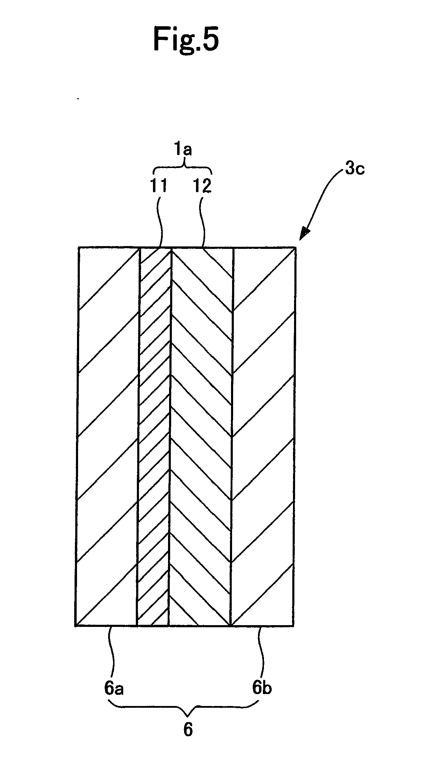

Fig.5 shows the sectional view of the structure which applied the sound absorbing material 1a to the sound insulation wall of the first embodiment. Meanwhile, in this figure, the same reference numbers are given to the portions which are common to Fig.1, and detailed explanation is omitted.

In Fig.5, the structure 3c of this invention has the hollow double wall 6 which is placed as the simplified partition, for example on the floor inside the building.

The hollow double wall 6 comprises the first wall member 6a which is arranged in the sound source side, and the second wall member 6b which is arranged in parallel with the first wall member 6a at the position where predefined length was estranged from the first wall member 6a in the sound receiving side. And, the aforementioned sound absorbing material 1a is arranged in parallel with the first wall member 6a (or the second wall member 6b) between these first and second wall members 6a, 6b.

According to the structure such the composition, because the sound absorbing material 1a that the flame retardancy which fits the standard of the flame retardancy of the Building Standard Law is given to the sound absorbing material itself is arranged between the first and second wall members 6a, 6b, as before, the sound absorbing material can be arranged in the place where the flame retardancy is needed. And, because neither the halogen system flame retardant nor the lead compound is used as the flame retardant, even if the sound absorbing material combusts, there is no fear that the noxious fume is generated during combustion. Further, because the film 11 is integrated with the first porous layer 12, the construction on the site can be performed easily.

### [Fourth embodiment]

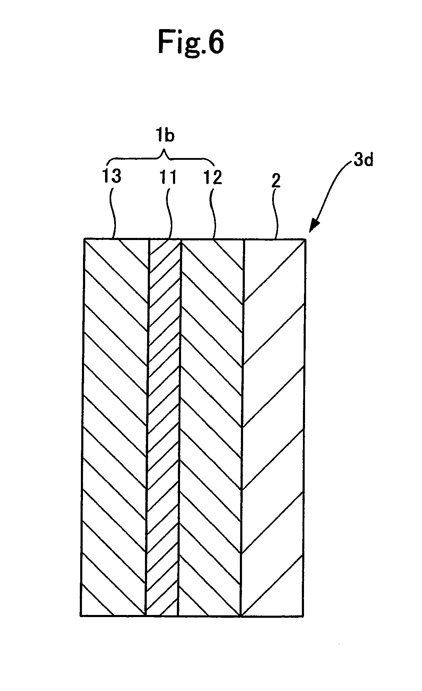

Fig. 6 shows the sectional view of another sound absorbing material and the structure using the same of the fourth embodiment in this invention. Meanwhile, in this figure, the same reference numbers are given to the portions which are common to Fig.1, and detailed explanation is omitted.

In Fig. 6, the another sound absorbing material 1b of this invention comprises the film 11 composed of the silicone rubber, and the first porous layer 12 which is laminated on the back surface of the film 11, and the porous layer 13 (hereinafter called, "second porous layer") which is laminated on the front surface of the film 11.

Here, the reason to laminate the first and second porous layer 12, 13 on the both surfaces of the film 11 is that the film 11 acts as the mass, that is, the role of the weight, and the first and second porous layer 12, 13 act as spring, that is, the role of the air spring, and the sound absorption is performed by membrane vibration.

Meanwhile, the second porous layer 13 is formed by the same material as the aforementioned first porous layer 12. And, it is preferable to integrate the film 11 at least with any one of the first and second porous layer 12, 13 by the aforementioned similar means.

In the another sound absorbing material 1b of such composition, for a rigid wall 2, by making the first porous layer 12 face the rigid wall 2, and by arranging the another sound absorbing material 1b in parallel with the rigid wall 2, the structure 3d of this invention is formed.

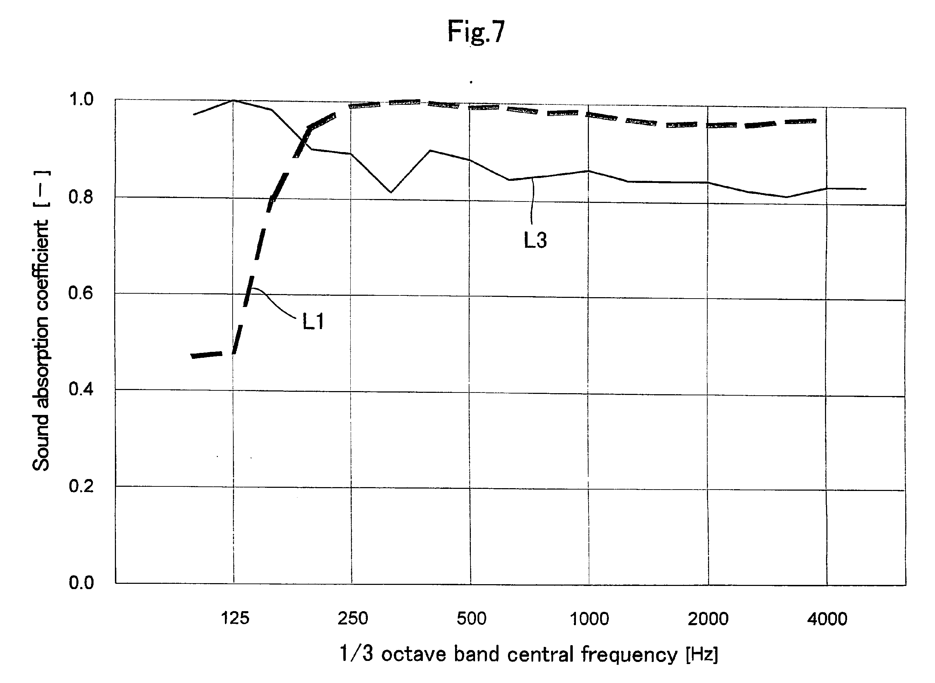

Fig.7 shows the sound absorption characteristics of the sound absorbing material of the fourth embodiment. Here, in the figure, as well as Fig. 3, the dotted line L1 shows the sound absorption characteristics of the sound absorbing material of the conventional technology when the thickness of the porous layer (glass wool) is 100mm. And the solid line L3 shows the sound absorption characteristics of the sound absorbing material of the fourth embodiment when the thickness of the film (silicone rubber film) 11 is 0.5mm and the thicknesses of the first and second porous layer (glass wool) 12, 13 are 75mm.

From this figure, in the sound absorbing material (L1) of the conventional technology, as before, it is clear that although the sound absorption coefficient in the high-frequency band beyond about 200Hz is high, the sound absorption coefficient in the low-frequency band about 200Hz or less is low. On the other hand, in the sound absorbing material (L3) of the fourth embodiment, it is clear that the superior sound absorption characteristic is shown not only in the low-frequency band about 200Hz or less but also in the high-frequency band beyond about 200Hz.
Therefore, if the sound absorbing material of the fourth embodiment is used, the sound absorbing material which is applicable to the wide frequency band can be provided.

### [Fifth embodiment]

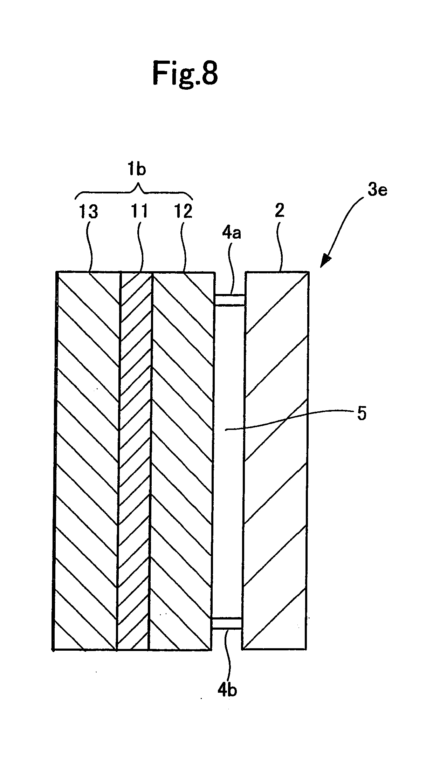

Fig.8 shows the sectional view of the structure of the filmy sound absorbing structure which used the sound absorbing material 1b of the fourth embodiment. Meanwhile, in this figure, the same reference numbers are given to the portions which are common to Fig.1, Fig.4 and Fig.6, and detailed explanation is omitted.

In Fig.8, the structure 3e of this invention comprises the rigid wall 2, and the filmy (thickness: about 0.5mm) sound absorbing material 1b that the first porous layer 12 faces the rigid wall 2 and which is arranged on the sound source side of the rigid wall 2 in parallel with the rigid wall 2 through a pair of supporting members 4a, 4b, and the back air layer 5 which is sectioned between the sound absorbing material 1b and the rigid wall 2.

In the structure 3e of the filmy sound absorbing structure of such composition, as before, because the back air layer 5 acts as the spring to the mass of the filmy sound absorbing material 1b, the single resonance system is formed. And, when the frequency of the sound wave accorded with the resonance frequency of this single resonance system, the filmy sound absorbing material 1b vibrates, and sound absorption is performed by the internal friction. Therefore, according to the structure 3e of the fifth embodiment, as before, the structure 3e can be arranged in the place where the flame retardancy is needed. And, because neither the halogen system flame retardant nor the lead compound is used as the flame retardant, even if the sound absorbing material combusts, there is no fear that the noxious fume is generated during combustion. Further, because the film 11 is integrated with the first porous layer 12 , the construction on the site can be performed easily. In addition, the sound absorption coefficient can be improved more than the structure 3b of the fourth embodiment.

### [Sixth embodiment]

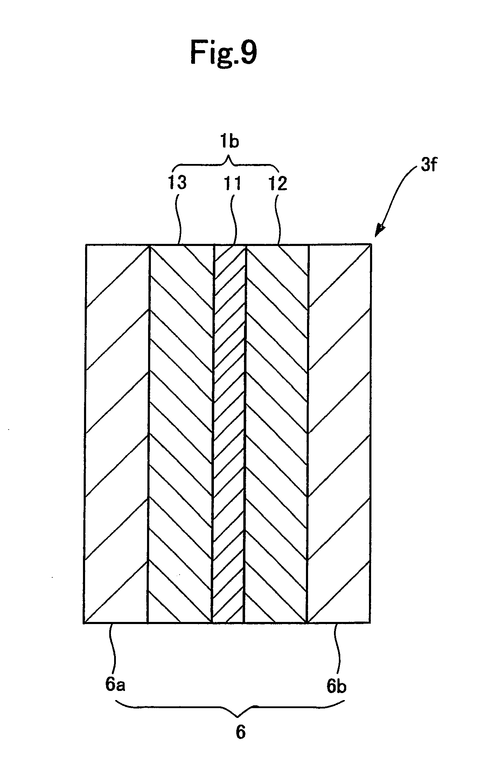

Fig.9 shows the sectional view of the structure that the sound absorbing material 1b of the fourth embodiment is applied to the sound insulation wall. Meanwhile, in this figure, the same reference numbers are given to the portions which are common to Fig.1, Fig.5 and Fig.6, and detailed explanation is omitted.

In Fig.9, as before, the structure 3f of this invention has the hollow double wall 6 which is placed as the simplified partition on the floor inside the building.

As before, the hollow double wall 6 comprises the first wall member 6a which is arranged in the sound source side, and the second wall member 6b which is arranged in parallel with the first wall member 6a at the position where predefined length was estranged from the first wall member 6a in the sound receiving side. And, the sound absorbing material 1b of the fourth embodiment is arranged in parallel with the first wall member 6a (or the second wall member 6b) between these first and second wall members 6a, 6b.

According to the structure such the composition, because the sound absorbing material 1b that the flame retardancy which fits the standard of the flame retardancy of the Building Standard Law is given to the sound absorbing material itself is arranged between the first and second wall members 6a, 6b, as before, the sound absorbing material can be arranged in the place where the flame retardancy is needed. And, because neither the halogen system flame retardant nor the lead compound is used as the flame retardant, even if the sound absorbing material combusts, there is no fear that the noxious fume is generated during combustion. Further, because the film 11 is integrated with the first porous layer 12, the construction on the site can be performed easily.

### INDUSTRIAL APPLICABILITY

In this invention, it is possible to modify or revise the invention within the scope of claims as follows.

First, in the aforementioned embodiment, although the case that the silicone rubber is used as the film is explained, instead of the silicone rubber, also it is possible to use any one of the rubber selected from natural rubber, isoprene rubber, styrene-butadiene rubber, butadiene rubber, nitrile-butadiene rubber, butyl rubber, ethylene-prcpylene rubber, fluoro-rubber, chlorosulfonated polyethylene rubber, chlorinated polyethylene rubber, epichlorohydrin rubber, polysulfide rubber and polyolefin.

Second, in the aforementioned embodiment, although the case that the film 11 is integrated at least with any one of the first or the second porous layer 12, 13 by means of adhesion or silicone graft reaction and so on is explained, also it is possible to integrate both by giving some pressure when the film 11 and/or the first or the second porous layer 12, 13 reached the softening temperature (for example, 80°C) after heating the film 11 and/or the first or the second porous layer 12, 13.

Third, in the aforementioned embodiment (Fig.5, Fig. 9), although the sound insulation wall that the sound absorbing materials 1a, 1b of the first or fourth embodiment is arranged between the first wall member 2 and the second wall member 3 is explained, also it is possible to arrange the sound absorbing materials 1a, 1b of the first or the fourth embodiment in parallel with the second wall member 3 through a pair of supporting members 5a, 5b between the first wall member 2 and the second wall member 3 in the sound source side of the second wall member 3.

Fourth, in the aforementioned embodiment, although the heat release value of combustion and the heat release rate of combustion are explained, also it is possible that the heat release value of combustion of the sound absorbing material itself is 8 MJ/m² or less, and it is possible that the heat release rate of combustion of the sound absorbing material itself is [200 kW/m²]·10 sec or less.

## Claims

1. A sound absorbing material **characterized by** comprising a film composed of a rubber, and a porous layer laminated on a back surface of said film.

2. A sound absorbing material **characterized by** comprising a film composed of a rubber, a porous layer laminated on a back surface of said film, and an another porous layer laminated on a front surface of said film.

3. The sound absorbing material according to claim 1 or claim 2,
**characterized in that**:
said rubber is composed of a silicone rubber.

4. The sound absorbing material according to any one of claim 1 to 3, **characterized in that**:
a heat release value of combustion of said film is 8 MJ/m² or less.

5. The sound absorbing material according to any one of claims 1 to 4, **characterized in that**:
a heat release rate of combustion of said film is [200 kW/m²]·10sec or less.

6. The sound absorbing material according to claim 1 or claim 2,
**characterized in that**:
said rubber is composed of any one of the rubber selected from natural rubber, isoprene rubber, styrene-butadiene rubber, butadiene rubber, nitrile-butadiene rubber, butyl rubber, ethylene-propylene rubber, fluoro-rubber, chlorosulfonated polyethylene rubber, chlorinated polyethylene rubber, epichlorohydrin rubber, polysulfide rubber and polyolefin.

7. The sound absorbing material according to any one of claims 1 to 6, **characterized in that**:
said film includes an inorganic compound.

8. The sound absorbing material according to claim 7 , **characterized in that**:
said inorganic compound comprises a compound including any one of Si, Ca, Sr, Ba, or comprises a blended material of the compound including any one of Si, Ca, Sr and Ba.

9. The sound absorbing material according to any one of claims 1 to 8, **characterized in that**:
said porous layer is formed from a material having flame retardancy.

10. The sound absorbing material according to any one of claims 1 to 8, **characterized in that**:
said porous layer is formed from any one of glass wool or rock wool, or from a mixture thereof.

11. The sound absorbing material according to any one of claims 1 to 10, **characterized in that**:
said film is integrated with said porous layer.

12. The sound absorbing material according to any one of claims 2 to 10, **characterized in that**:
said film is integrated with either said porous layer or said another porous layer.

13. The sound absorbing material according to claim 11 or claim 12, **characterized in that**:
said film is integrated with said porous layer and/or said another porous layer by adhesion.

14. The sound absorbing material according to claim 11 or claim 12, **characterized in that**:
said film is integrated with said porous layer and/or said another porous layer by thermal adhesion.

15. The sound absorbing material according to claim 11 or claim 12, **characterized in that**:
said film is integrated with said porous layer and/or said another porous layer by silicone graft reaction.

16. The sound absorbing material according to claim 11 or claim 12, **characterized in that**:
said film is integrated with said porous layer and/or said another porous layer when a part of said film enters into empty spaces of said porous layer and/or said another porous layer.

17. A structure **characterized by** comprising a sound absorbing material according to any one of claims 1 to 16 and a rigid wall, wherein
a porous layer which constitutes said sound absorbing material faces said rigid wall, and said sound absorbing material is arranged in parallel with said rigid wall.

18. A structure **characterized by** comprising a sound absorbing material according to any one of claims 1 to 16 and a sound insulation board, wherein
an another porous layer which constitutes said sound absorbing material faces said sound insulation board, and said sound absorbing material is arranged in parallel with said sound insulation board.

19. A structure **characterized by** comprising a sound absorbing material according to any one of claims 1 to 16 and a rigid wall, wherein
a porous layer which constitutes said sound absorbing material faces a rigid wall through an air layer, and said sound absorbing material is arranged in parallel with said rigid wall.

20. A structure **characterized by** comprising a sound absorbing material according to any one of claims 1 to 16 and a sound insulation board, wherein
an another porous layer which constitutes said sound absorbing material faces a sound insulation board through an air layer, and said sound absorbing material is arranged in parallel with said sound insulation board.

21. A structure **characterized by** comprising a sound absorbing material according to any one of claims 1 to 16, wherein
a heat release value of combustion of said sound absorbing material is 8 MJ/m² or less, and a heat release rate of combustion of said sound absorbing material is [200 kW/m²]·10 sec or less.
